# EUROPEAN PATENT SPECIFICATION

(11) **EP 3 853 486 B1**
(45) Date of publication and mention of the grant of the patent: **02.11.2022**
(21) Application number: 19769970.5
(22) Date of filing: 06.09.2019
(51) Int. Cl.: F16B 13/06, B25B 31/00

(54) **ACCESSORY FOR A HAMMER DRILL AND ITS USE FOR INSERTING A WALLBOLT**
ZUBEHÖR FÜR EINEN BOHRHAMMER UND SEINE VERWENDUNG ZUM EINTREIBEN EINES WANDBOLZENS
ACCESSOIRE POUR MARTEAU PERFORATEUR ET SON UTILISATION POUR L'INSERTION D'UN BOULON MURAL

(30) Priority: 18.09.2018 FR 1858390
(43) Date of publication of application: 28.07.2021
(73) Proprietor: Illinois Tool Works, Inc., Glenview, Illinois 60025 (US)
(72) Inventor: PERRIER, Matthieu, Glenview, Illinois 60025 (US); TOURNIER, Ludovic, Glenview, Illinois 60025 (US)
(74) Representative: HGF
(86) International application number: PCT/US2019/049934
(87) International publication number: WO 2020/060774

(56) References cited:
- EP-A1- 2 345 496
- FR-A1- 3 013 085
- US-A- 4 468 826
- US-A1- 2018 141 190

## Description

### PRIORITY

This application claims priority to and the benefit of French Patent Application No. 1858390, filed September 18, 2018.

### TECHNICAL FIELD

The invention concerns in particular an accessory for a hammer drill according to the preamble of claim 1 and its use for inserting a wallbolt.

### BACKGROUND

A drill is a tool for drilling a hole in a wall by means of a drill bit. A tool of this kind is conventionally portable and comprises a handle for manipulating the tool and a chuck for fixing the drill bit, the outside diameter of the drill bit depending on the required bore diameter.

There exist different types of drill bit and of means for fixing a drill bit. Known for example are drill bits including a drilling portion cut helically and a cylindrical portion for fixing it to the chuck of the tool, which includes jaws for clamping the cylindrical portion. This type of drill bit and tool is generally reserved for drilling without hammering, just the rotation of the drill bit about its axis being used to drill a hole.

Also known are hammer drills and drill bits. The portion for fixing the drill bit to the chuck of the tool is then of the SDS (SDS+, SDSmax, etc.) type, well known to the person skilled in the art, which is used both to rotate the drill bit about its axis and to impose on it a succession of movements in translation along its axis, which cause impacts in the wall and facilitate the production of the hole, in particular in a wall made of a hard material such as concrete.

It is known to use a drill to screw in a fixing element such as a screw. For this purpose it suffices to remove the drill bit from the jaws of a tool for example and to replace it with an adapter that is clamped by the jaws of the tool instead of the drill bit and carries a screwdriver bit adapted to drive the fixing element. However, in the case of a hammer drill or a drill able to operate in hammer drilling mode, this is at present made difficult by the SDS type connection of the aforementioned drill bits.

The document EP 2 345 496 A1, which discloses an accessory according to the preamble of claim 1, describes a tool holder of a machine tool, such as a hammer drill, having a sleeve with a rear end and a front end. A drive shaft can be inserted into the rear end, the drive shaft can be used with an SDS plus clamping system. A head is molded onto the front end and a recess, which serves as a holding cup for an insertable tool bit, is in the head. The holding cup has an internal profile in the form of a hexagon socket.

The document US-A-4,468,826 describes a hammer drill that is not equipped with an SDS type connection. Also, even if the drill is adapted to be equipped with an accessory around the drill bit, this tool is not configured to adapt its operating parameters as a function of the equipment used (drill bit or accessory).

The document US-A-5,409,333 describes a drill that is not equipped with an SDS type connection and is not configured to transmit blows.

Moreover the prior art does not offer an effective solution for inserting a wallbolt also known as an expansion bolt. The applicant's document FR-A1 -3 013 085 describes a fixing element of this type.

The present invention proposes an improvement to the current technique and a response to the latter need that is simple, effective and economical.

### SUMMARY

The invention, defined by appended claim 1, therefore provides an accessory for a hammer drill, said accessory having an elongate shape along an axis A and including a first longitudinal end for an SDS type connection and a second longitudinal end including a cavity with axis A and a cross section of hexagonal shape configured to receive a nut of a wallbolt, characterized in that it further comprises a finger with axis A extending in said cavity, this finger being intended to have an outside diameter less than the inside diameter of said nut and being configured to bear axially on one end of a threaded body of said wallbolt to transmit blows.

Thus the invention proposes an accessory adapted to insert a wallbolt, this accessory including both an SDS connection end and another end to adapted cooperate with a nut of the wallbolt, that other end being for example of the SW13 type known in this technical field. It is the finger of the accessory that enables transmission of blows to the wallbolt necessary for inserting it.

The accessory according to the invention may have one or more of the following features separately or in combination:
- the accessory further includes a rotation torque transmission section distant from said first end,
- said section has a polygonal shape in cross section,
- an elastically deformable member is mounted around said finger and configured to bear on said nut in order to urge it toward the threaded body,
- said member is a coil spring that extends in said cavity around said finger and a first end of which is fixed to the bottom of the cavity or to the finger and an opposite second end of which is configured to bear on said nut,
- the accessory is made entirely of metal,
- the accessory comprises a body formed in one piece from plastic material and including said first and second longitudinal ends, the finger being made of metal and mounted in and fixed into the cavity at the second longitudinal end.

The present invention also concerns a hammer drill including a chuck equipped with a rotary part for mounting a drill bit by an SDS type connection, this hammer drill being equipped with an accessory as described hereinabove the first longitudinal end of which fits into said rotary part.

The drill according to the invention may have one or more of the following features separately or in combination:
- said rotary part comprises torque transmission means configured to cooperate with said section by a male-female type fit,
- the hammer drill includes a drilling mode selector, respectively with and without hammering, and/or a rotary part rotation speed selector, and/or a rotary part rotation direction selector;
- the hammer drill includes a brushless motor driving said rotary part in rotation, this motor being connected by a microcontroller to said selector(s) and to a trigger for actuating the hammer drill.

The present invention also concerns a method of placing a wallbolt into a hole in a wall by means of a hammer drill as described hereinabove, the wallbolt including a threaded body and a nut, characterized in that it comprises the steps of:
a) engaging the nut previously screwed onto the threaded body in the cavity of said accessory, the wallbolt being engaged in the hole in the wall just before or just after step a),
b) striking the threaded body and simultaneously driving the nut in rotation in its unscrewing direction,
c) driving the nut in rotation in its screwing direction.

Step b) is advantageously continued until the second longitudinal end of the accessory comes to bear on the wall either directly or via a washer carried by the wallbolt.

The nut may be completely unscrewed from the threaded body during step b) and screwed back onto the threaded body during step c).

The accessory is connected to the drill by an SDS connection so as to be able to transmit hammering to the wallbolt. The accessory is driven in rotation during hammering. Clockwise rotation of the nut of the wallbolt would lead to screwing in of that nut which would risk limiting the depth of insertion of the wallbolt by hammering it in (because the screwed in nut would come to bear on the wall into a hole in which the wallbolt is driven). Anticlockwise rotation of the nut makes it possible to avoid this problem.

### BRIEF DESCRIPTION OF THE FIGURES

The invention will be better understood and other details, features and advantages of the present invention will become more clearly apparent on reading the following description given by way of nonlimiting example and with reference to the appended drawings in which:
- Figures 1 to 4 are diagrammatic views in axial section of a hammer drill equipped with an accessory according to the invention, the drill being shown in part, these figures showing steps of a method of inserting a wallbolt into a hole in a wall;
- Figures 5 to 8 are diagrammatic views of the accessory from Figure 1, Figures 5 and 8 being perspective views, Figure 7 being a view in axial section and Figure 6 being a front view of one of the longitudinal ends of the accessory;
- Figures 9 to 11 are diagrammatic perspective views of variant embodiments of the accessory according to the invention;
- Figures 12a to 12c are figures similar to Figures 5 to 7, respectively, and show a variant embodiment,
- Figures 13a to 13c are figures similar to Figures 5 to 7, respectively, and show a variant embodiment,
- Figures 14a to 14c are figures similar to Figures 5 to 7, respectively, and show a variant embodiment,
- Figures 15a to 15c are figures similar to Figures 5 to 7, respectively, and
- Figure 16 is a highly diagrammatic representation of an electronic control circuit of the drill.

### DETAILED DESCRIPTION

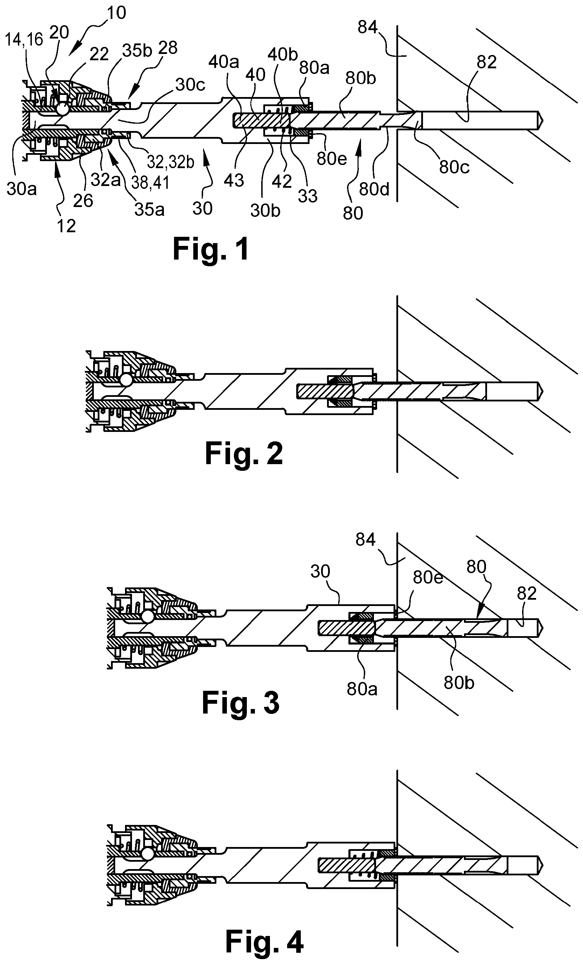

Figures 1 to 8 and 15a to 15c show a first embodiment of an accessory 30 according to the invention, that accessory 30 being used by a hammer drill 10 to insert a wallbolt 80 into a hole 82 in a wall 84.

The drill 10 is partly shown in Figures 1 to 4, which represent steps of a method of inserting the wallbolt 80. This drill 10 is conventionally portable and therefore comprises a handle to be held by a user and a chuck 12 for mounting a drill bit, only the chuck 12 of the drill being visible in the drawings.

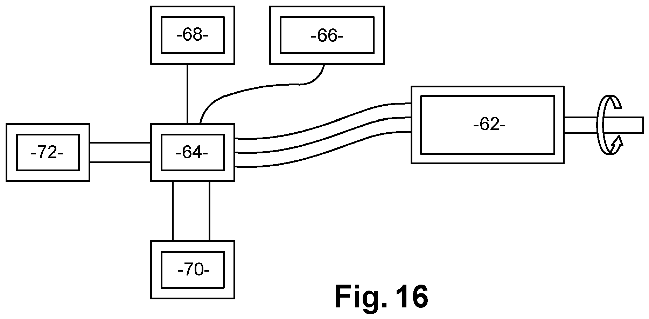

This tool 10 is able to function in two drilling modes, respectively with and without hammering. To this end the drill 10 is equipped with a first selector 70 for selecting one of these two drilling modes (Figure 16).

This first selector 70 is situated on a casing of the drill and is accessible to the user. It may take the form of a knob rotatable by the user between two positions spaced 180° from one another for example, a first position selecting the drilling without hammering mode in which a pointer on the knob is for example oriented toward a first diagram on the casing representing a drill bit for example and a second position selecting the drilling mode with hammering in which the pointer on the knob is oriented toward another diagram on the casing representing a hammer for example.

The drill 10 may also be equipped with a speed selector 66 (Figure 16). This selector 66 is situated on the casing of the drill and is accessible to the user. It may take the form of a switch movable in translation by the user between two positions, a first position selecting a slow drilling/screwing speed and high torque in which a pointer on the knob is for example oriented toward a first diagram on the casing representing a tortoise for example, and a second position selecting a high speed and a low torque in which the pointer on the knob is oriented toward another diagram on the casing representing a hare for example.

The drill 10 further includes a rotation direction selector 72 (Figure 16). This selector 72 is situated on the casing of the drill and is accessible to the user. It may take the form of a switch movable in translation by the user between two positions, a first position selecting a clockwise rotation direction and a second position selecting an anticlockwise rotation direction of the rotary part of the chuck of the tool.

The drill preferably includes a brushless motor 62 controlled electronically and, thanks to the speed selector, enabling choice of a torque and a speed suitable for the intended function.

Figure 16 shows an electronic control circuit of the drill. This circuit includes the motor 62 that drives the rotary part of the chuck 12 of the drill. The motor 62 is connected by a microcontroller 64 to the selector 66 and to the trigger 68 for actuating the tool. The microcontroller 64 is moreover connected to the mode selector 70, with or without hammering, and to the rotation direction selector 72. The microcontroller 64 controls the motor 62 as a function of setpoints received from the trigger 68 and from the selectors 66, 70 and 72.

In one particular embodiment the selector 66 includes a magnet that is detected by two Hall-effect sensors in the electronic control circuit. Active detection of one mode of use or the other: a normal mode with a maximum rotation speed of 800 rpm and a maximum torque of 7 N.m for hammer drilling and fast screwing, and a mode with the speed reduced to 300 rpm and a maximum torque of 15 N.m for screwing at low speed and high torque and hammer drilling with a reduced impact force. Activation of one mode enables the maximum rotation speed of the drill to be defined. The trigger 68 of the drill, thanks to its progressive action, enables any rotation speed to be achieved within the range defined in this way without the torque varying. The Hall-effect sensors continuously detect the position of the rotor of the brushless motor. The phases of the windings of the stator can therefore be switched in the appropriate sequence.

The electronic circuit therefore enables the rotation speed of the motor to be controlled very accurately, to control the angular position (for example the number of screwing turns), the clamping torque, and the rotation direction.

The speed and the angular position are perfectly determined thanks to the Hall-effect sensors that detect the position of the magnets of the rotor of the motor. The clamping torque is deduced/calculated by measuring the current injected into the various phases of the stator of the motor. In fact, the current and the torque are directly proportional.

As can be seen in Figures 1 to 4, the chuck 12 of the drill 10 is configured to receive a drill bit (not shown) by an SDS (SDS+, SDSmax, etc.) type connection. A drill bit is naturally chosen as a function of its drilling diameter, that is to say the diameter of its drilling portion. The diameter of its SDS fixing portion is always standard.

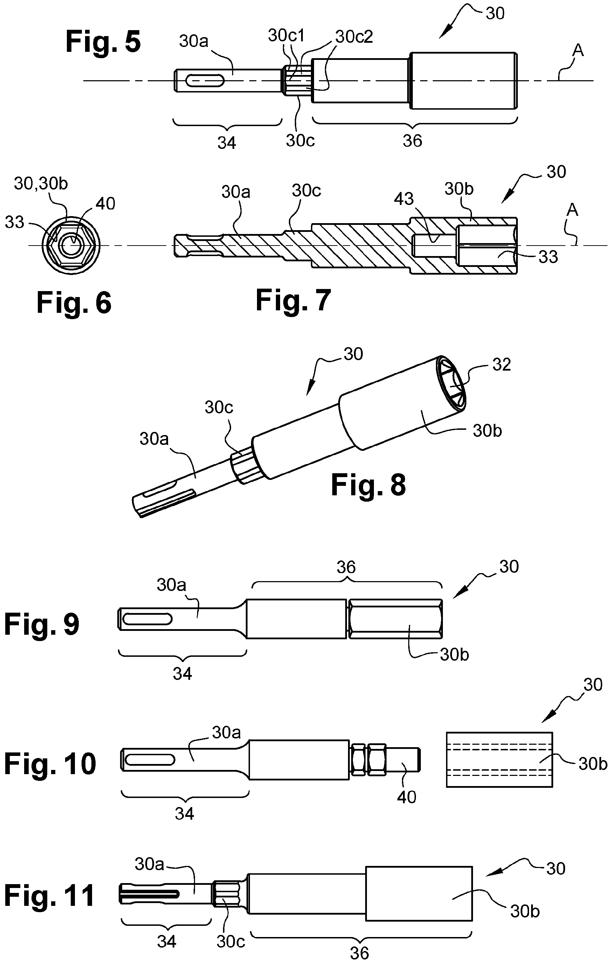

In the following description expressions such as "axial", "radial", "longitudinal", etc. are referred to the axis of the chuck of the drill or to the axis of the drill bit or of the accessory 30, which is designated by the reference A in Figures 5 and 7.

The chuck 12 comprises a fixed part and a part rotating about the axis A. The rotary part comprises SDS type means 14 for connecting the drill bit that will not be described in detail because they are part of the general knowledge of the person skilled in the art in this field. To understand the invention, it is should be noted that these connecting means 14 comprise a rotary ring 16 that extends around the SDS fixing portion of the drill bit and comprises radial through-openings 20 for mounting balls 22 intended to be engaged in longitudinal grooves in this portion of the drill bit. A locking mechanism 26 enables radial immobilization of the balls 22 in the grooves whilst allowing relative movement in translation of the drill bit in the chuck of the drill, which is in particular a function of the length of the grooves 24. The mechanism 26 is accessible to the user who is able to unlock the assembly in order to remove or to replace the drill bit.

The rotary part of the chuck of the drill 10 may further comprise means 28 for transmitting rotation torque to the accessory 30.

Here these transmission means 28 comprise a tubular body 32 intended to be constrained to rotate with the rotary part of the chuck of the drill. The body 32 is intended to extend around a portion of the ring 16 and may be directly constrained to rotate with that ring. To this end it comprises an end portion 32a situated on the side of the ring 16 and shaped to nest over the ring.

Over this end portion 32a is an annular seal 35a that cooperates both with the ring 16 and with the aforementioned mechanism 26 to prevent the passage of dust between these components during operation. The body 32 further comprises an internal annular groove housing another annular seal 35b, such as an O-ring, that extends around the drill bit and cooperates with it when it is mounted in the chuck of the drill.

The body 32 further comprises on the side opposite its portion 32a an end portion 32b shaped to cooperate through a male-female fit with a section 30c of the accessory 30. In the embodiment shown this portion 32b is female and receives the male section 30c of the accessory.

The accessory 30 is intended to be rotated by the rotary part of the chuck of the drill and therefore to be constrained to rotate with that rotary part. This is achieved by cooperation of shapes, the male-female fit being produced for example by portions of polygonal section, as in the example shown.

The interior of the portion 32b of the body therefore has a polygonal shape in cross section, to be more precise a hexagonal shape, which is complementary to that in section of the section 30c of the accessory 30.

This section 30c therefore has plane exterior faces 30c1 regularly distributed over its circumference and connected two by two by longitudinal edges 30c2 that here are rounded (Figure 5).

The body 32 of the transmission means 28 may be equipped with a ball system 38 comprising at least one ball (which cannot be seen) engaged in a radial hole in the portion 32b of the body and retained in that hole by means of a split ring 41 that surrounds the portion 32b and passes over the ball. The ball is therefore prevented from escaping radially outward via this ring 41 as well as radially inward because of the shape or the dimensions of the hole, the radially interior outlet of which may for example be of smaller diameter than the ball. The ball is urged radially inwards by the ring 41 and by default adopts a position in which it in part projects radially into the internal passage of the portions 32a in which the section 30c of the extender fits.

This ball system 38 may be used to fix in a removable manner an extender or another accessory to the chuck of the tool. When that extender is mounted in the chuck, the ball is then engaged in a void of the extender, which enables axial retention of the extender vis a vis the chuck. A manual force for extracting the extender may be applied by the user to overcome the resistance of the ball and to withdraw the extender from the drill by axial movement in translation.

To prevent deterioration of this system during transmission of the torque necessary for inserting the wallbolt, the ball is preferably not in contact with the accessory 30. It is the rounded edges 30c2 that make it possible to avoid contact between the ball and the accessory 30 whatever the position of the accessory in the chuck of the tool around the axis A.

The accessory 30 has an elongate general shape along the axis A and comprises a first longitudinal end 30a for an SDS type connection and therefore adapted to be interengaged with and cooperate with the connecting means 14 and a second longitudinal end 30b including a cavity 33 with axis A and a cross section of hexagonal shape configured to receive a nut 80a of the wallbolt 80.

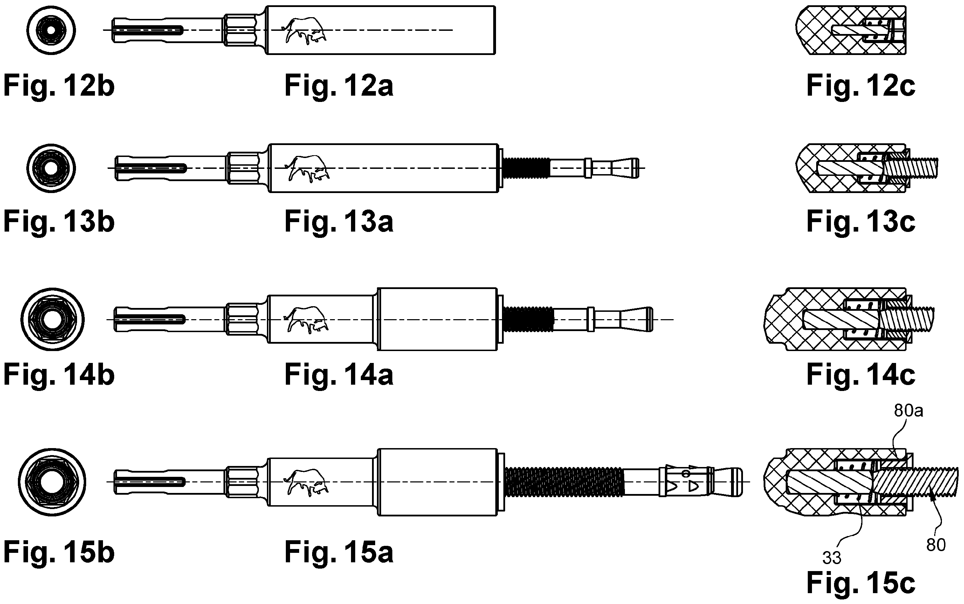

The wallbolt 80 conventionally comprises i) a longitudinal threaded body 80b formed in one piece with an expansion cone 80c at one of its ends, this cone being connected to the rest of the body by a cylindrical portion 80d of diameter less than the nominal diameter of the body, and ii) an expandable plug (not shown but visible in Figure 15c) mounted around the cylindrical portion 80d of the body and through which the expansion cone 80c is adapted to be moved to deform the plug and to anchor the wallbolt in the hole 82 in the wall 84. The section 30c is therefore independent of the SDS connection.

In the example shown the accessory 30 comprises two portions 34, 36 having different diameters. The smaller diameter portion 34 is that including the first end 30a and is connected to the larger diameter portion 36 by the aforementioned section 30c. The larger diameter portion 36 extends from this section 30c as far as the second end 30b of the accessory that comprises the cavity 33.

The cavity 33 has a polygonal and preferably hexagonal shape in cross section, for example of the SW13 type, to cooperate with the nut 80a of the wallbolt 80.

The accessory comprises a finger 40 with axis A extending in the cavity 33. This finger 40 has an outside diameter less than the inside diameter of the nut 80a so that the latter can be engaged over the finger when inserting the wallbolt 80. Here the finger 40 has a cylindrical general shape one end 40a of which is engaged, for example forcibly engaged, in a bore 43 in the bottom of the cavity 33 and an opposite end 40b of which is a free end configured to bear axially on the threaded body 80b of the wallbolt while inserting it.

An elastically deformable member 42 is advantageously mounted in the cavity 33 around the finger 40 to urge the nut 80a axially toward the threaded body 80b when inserting the wallbolt 80. In the example shown this member 42 is a compression coil spring a first end of which is fixed to the bottom of the cavity 33 or to the finger 40 and an opposite second end of which is configured to come to bear on the nut 80a.

As explained in more detail hereinafter, when fitting a wallbolt 80, the finger 40 is used to transmit blows to the threaded body 80b. The threaded body 80b is made of metal and the finger 40 is preferably also made of metal for it to be sufficiently robust and to be able to transmit impact forces without deteriorating.

With the exception of the spring, which may also be made of metal, the rest of the accessory may be made of plastic material. In this case it is formed of a plastic one-piece body as shown in Figures 5 to 8 and 11 and the bottom of its cavity 33 includes the bore 43 for engagement and fixing of the metal finger 40.

Alternatively, as shown in Figure 9, the accessory 30 may be made entirely of metal, formed of one or more parts assembled together.

In a further variant shown in Figure 10 the end 30b of the accessory is made from plastic material and removably mounted on and fixed to a metal body of the accessory that comprises the other parts of that accessory. This latter variant is advantageous in that the metal body may be standard and unique and may have a second end 30b as a function of the size of the wallbolt 80 to be inserted.

The variants from Figures 9 to 11 show that the section 30c is optional. It is present on the plastic accessory from Figure 11 for optimum transmission of the rotation torque without deterioration of the SDS connection end 30a and is absent in the accessories 30 from Figures 9 and 10 because making the end 30a from metal may suffice for the transmission of the torque. Of course, an accessory 30 having a metal end 30a could include a section 30c. Generally speaking, the section 30c is useful depending on the rotation torque to be applied.

Figures 12a to 15c show that the accessory must be adapted to suit the size of the wallbolt 80 to be inserted and in particular that of its nut. The cavity 33 and where applicable the diameter of the second end 30b therefore vary as a function of the size of the nut 80b.

A method of inserting a wallbolt 80 will now be described with reference to Figures 1 to 4.

The hole 82 is first drilled in the wall 84, for example using the drill 10 fitted with a drill bit and used in hammer drill mode.

A wallbolt 80 is engaged in the hole 82, as shown in Figure 1. The nut 80b is already screwed onto one end of the threaded body 80b and the cone 80c is engaged in the hole 82. This operation may be carried out manually and directly by an operator.

The end 30a of the accessory 30 is engaged in the chuck 12 of the drill 10 which is positioned by the operator so that the nut 80b of the wallbolt 80 is engaged in the cavity 33 of the accessory 30, as shown in Figure 1.

The drill 10 is then operated so that on the one hand the threaded body 80b of the wallbolt is struck by the accessory and in particular its finger 40 and on the other hand the accessory turns in the anticlockwise direction to unscrew the nut 80a. The finger 40 turns and strikes the wallbolt 80 which remains substantially immobile in rotation in the hole 82.

The situation arrived at is then that shown in Figure 2 in which the nut 80a is unscrewed, possibly completely, from the threaded body 80b that is progressively engaged in the hole 82. The nut then slides around the finger 40 and compresses the spring. This operation is continued until the accessory 30 comes to bear directly on the wall 84 directly or via a washer 80e mounted around the threaded body 80b, as shown in Figure 3. The threaded body 80b of the wallbolt is then perfectly engaged in the hole 82 which generally has to have a depth greater than the recommended distance for inserting the wallbolt.

The drill is then operated so that it drives the accessory 30 in the clockwise direction in order to screw the nut 80b onto the threaded body 80a, ideally without impact forces being transmitted by the drill 10 and the accessory 30 to the wallbolt.

The operating conditions of the drill, in particular between the step b) of striking the threaded body and simultaneously driving the nut in rotation in its unscrewing direction and the step c) of driving the nut in rotation in its screwing direction, can be selected either manually by the operator by means of the aforementioned selectors of the drill or automatically.

In the latter case, the drill may for example comprise integral sensors for detecting the nature of the element connected by an SDS connection to the chuck of the tool. If the drill detects a drill bit, it is able to adopt operating conditions appropriate to the use of the drill bit such as a high speed. If the drill detects the accessory, it is able to adopt operating conditions appropriate to its use such as a slow speed, whilst maintaining the hammering mode. This detection may employ the RFID, NFC or Bluetooth technology for example.

The drill may comprise sensors for detecting (for example through vibrations) the conditions of use of the tool and for appropriate adaptation of those conditions. The drill may for example modify its operating mode between the steps b) and c) if it detects for example direct or indirect bearing of the accessory 30 on the wall 84. When a drill bit is used for example the drill is able to detect by analysing machine parameters (low resisting torque/vibration) that a drill bit is associated with the drill and apply a maximum rotation speed for example. If the accessory is used the drill is able to detect a parameter such as the absence of resisting torque and vibration, which is characteristic of metal striking metal. The drill may then adopt anticlockwise rotation with hammering. Finally, when the wallbolt is engaged in the hole and the drill detects variations of the vibrations characteristic of hammering with no load the drill is able to switch to screwing at low speed.

The drill could moreover comprise an interface for selecting one or more modes, for example use of a drill bit, an accessory, etc. by a user. The drill would then be programmed to adopt operating conditions or a succession of operating conditions as a function of a program stored beforehand in the drill.

A portable electronic device such as a smartphone type mobile telephone could furthermore be used to communicate with the drill 10.

## Claims

1. Accessory (30) for a hammer drill (10), said accessory having an elongate shape along an axis A and including a first longitudinal end (30a) for an SDS type connection and a second longitudinal end (30b) including a cavity (33) with axis A and a cross section of hexagonal shape configured to receive a nut (80a) of a wallbolt (80) to be hammered, **characterized in that** it further comprises a finger (40) with axis A extending in said cavity, this finger being intended to have an outside diameter less than the inside diameter of said nut and being configured to bear axially on one end of a threaded body (80b) of said wallbolt to transmit blows.

2. Accessory (30) according to Claim 1 further comprising a rotation torque transmission section (30c) distant from said first end (30a).

3. Accessory (30) according to Claim 2 in which said section (30c) has a polygonal shape in cross section.

4. Accessory (30) according to any one of Claims 1 to 3 in which an elastically deformable member (42) is mounted around said finger (40) and configured to bear on said nut (80a) in order to urge it toward the threaded body (80b).

5. Accessory (30) according to Claim 4, in which said member (42) is a coil spring that extends in said cavity (33) around said finger (40) and a first end of which is fixed to the bottom of the cavity or to the finger and an opposite second end of which is configured to bear on said nut (80a).

6. Accessory (30) according to any one of Claims 1 to 5 made entirely of metal.

7. Accessory (30) according to any one of Claims 1 to 5 comprising a body formed in one piece from plastic material and including said first and second longitudinal ends (30a, 30b), the finger (40) being made of metal and mounted in and fixed into the cavity (33) at the second longitudinal end.

8. Hammer drill (10) including a chuck (12) equipped with a rotary part for mounting a drill bit by an SDS type connection, this tool being equipped with an accessory (30) according to any one of the preceding claims the first longitudinal end of which fits into said rotary part.

9. Tool (10) according to Claim 8, the accessory being as defined in Claim 2 or 3, in which said rotary part comprises torque transmission means (28) configured to cooperate with said section (30c) by a male-female type fit.

10. Tool (10) according to any one of the preceding claims comprising a drilling mode selector (70), respectively with and without hammer, and/or a rotary part rotation speed selector (66), and/or a rotary part rotation direction selector (72).

11. Tool (10) according to the preceding claim comprising a brushless motor (62) driving said rotary part in rotation, this motor being connected by a microcontroller (64) to said selector(s) (66, 70, 72) and to a trigger (68) for actuating the tool.

12. Method of placing a wallbolt (80) to be hammered into a hole (82) in a wall (84) by means of a tool (10) according to any one of Claims 8 to 11, the wallbolt including a threaded body (80b) and a nut (80a), **characterized in that** it comprises the steps of:
a) engaging the nut previously screwed onto the threaded body in the cavity (33) of said accessory (30), the wallbolt being engaged in the hole in the wall just before or just after step a),
b) striking the threaded body and simultaneously driving the nut in rotation in its unscrewing direction,
c) driving the nut in rotation in its screwing direction.

13. Method according to Claim 12 in which step b) is continued until the second longitudinal end (30b) of the accessory (30) comes to bear on the wall (84) either directly or via a washer (80e) carried by the wallbolt (80) to be hammered.

14. Method according to Claim 12 or 13 in which the nut (80e) is completely unscrewed from the threaded body (80b) during step b) and screwed back onto the threaded body during step c).

## Patentansprüche

1. Zubehörteil (30) für einen Schlagbohrer (10), wobei das Zubehörteil eine längliche Form entlang einer Achse A aufweist und ein erstes Längsende (30a) für eine SDS-artige Verbindung und ein zweites Längsende (30b) beinhaltet, das einen Hohlraum (33) mit Achse A und einem Querschnitt von sechseckiger Form, der konfiguriert ist, eine Mutter (80a) eines zu hämmernden Wandbolzens (80) aufzunehmen, beinhaltet, **dadurch gekennzeichnet, dass** es ferner einen Finger (40) mit Achse A aufweist, der sich in dem Hohlraum erstreckt, wobei dieser Finger einen Außendurchmesser aufweisen soll, der kleiner als der Innendurchmesser der Mutter ist, und so konfiguriert ist, dass er axial an einem Ende eines Gewindekörpers (80b) des Wandbolzens anliegt, um Schläge zu übertragen.

2. Zubehörteil (30) nach Anspruch 1, das ferner einen Rotationsdrehdrehmoment-Übertragungsabschnitt (30c) entfernt von dem ersten Ende (30a) aufweist.

3. Zubehörteil (30) nach Anspruch 2, wobei der Abschnitt (30c) eine polygonale Form im Querschnitt aufweist.

4. Zubehörteil (30) nach einem der Ansprüche 1 bis 3, wobei ein elastisch verformbares Element (42) um den Finger (40) herum angebracht ist und so konfiguriert ist, dass es an der Mutter (80a) anliegt, um sie in Richtung des Gewindekörpers (80b) zu drücken.

5. Zubehörteil (30) nach Anspruch 4, wobei das Element (42) eine Schraubenfeder ist, die sich in dem Hohlraum (33) um den Finger (40) erstreckt, und von der ein erstes Ende an dem Boden des Hohlraums oder an dem Finger befestigt ist, und von der ein gegenüberliegendes zweites Ende so konfiguriert ist, dass es an der Mutter (80a) anliegt.

6. Zubehörteil (30) nach einem der Ansprüche 1 bis 5, das vollständig aus Metall hergestellt ist.

7. Zubehörteil (30) nach einem der Ansprüche 1 bis 5, das einen einstückig aus Kunststoffmaterial gebildeten Körper aufweist und das erste und das zweite Längsende (30a, 30b) beinhaltet, wobei der Finger (40) aus Metall hergestellt ist und in dem Hohlraum (33) an dem zweiten Längsende angebracht und darin befestigt ist.

8. Schlagbohrer (10), der ein Spannfutter (12) beinhaltet, das mit einem Drehteil zum Anbringen eines Bohrers über eine SDS-artige Verbindung versehen ist, wobei dieses Werkzeug mit einem Zubehörteil (30) nach einem der vorhergehenden Ansprüche versehen ist, dessen erstes Längsende in das Drehteil passt.

9. Werkzeug (10) nach Anspruch 8, wobei das Zubehörteil wie in Anspruch 2 oder 3 definiert ist, wobei das Drehteil Drehmomentübertragungsmittel (28) aufweist, die so konfiguriert sind, dass sie mit dem Abschnitt (30c) durch eine Einführ-Aufnahme-Passung zusammenwirken.

10. Werkzeug (10) nach einem der vorhergehenden Ansprüche, das einen Bohrmoduswähler (70), jeweils mit und ohne Hammer, und/oder einen Drehteil-Drehzahlwähler (66) und/oder einen Drehteil-Drehrichtungswähler (72) aufweist.

11. Werkzeug (10) nach dem vorhergehenden Anspruch, das einen bürstenlosen Motor (62) aufweist, der das Drehteil in Drehung versetzt, wobei dieser Motor über einen Mikrocontroller (64) mit dem/den Wähler(n) (66, 70, 72) und einem Auslöser (68) zum Betätigen des Werkzeugs verbunden ist.

12. Verfahren zum Anordnen eines Wandbolzens (80), der mittels eines Werkzeugs (10) nach einem der Ansprüche 8 bis 11 in ein Loch (82) in einer Wand (84) gehämmert werden soll, wobei der Wandbolzen einen Gewindekörper (80b) und eine Mutter (80a) beinhaltet, **dadurch gekennzeichnet, dass** es die folgenden Schritte aufweist:
a) Einrasten der zuvor auf den Gewindekörper aufgeschraubten Mutter in den Hohlraum (33) des Zubehörteils (30), wobei der Wandbolzen kurz vor oder kurz nach Schritt a) in das Loch in der Wand eingesetzt wird,
b) Schlagen auf den Gewindekörper und gleichzeitiges drehendes Antreiben der Mutter in ihrer Abschraubrichtung,
c) drehendes Antreiben der Mutter in ihrer Schraubrichtung.

13. Verfahren nach Anspruch 12, wobei Schritt b) fortgesetzt wird, bis das zweite Längsende (30b) des Zubehörteils (30) entweder direkt oder über eine Unterlegscheibe (80e), die von dem zu hämmernden Wandbolzen (80) getragen wird, an der Wand (84) zur Anlage kommt.

14. Verfahren nach Anspruch 12 oder 13, wobei die Mutter (80e) während Schritt b) vollständig von dem Gewindekörper (80b) abgeschraubt wird und während Schritt c) erneut auf den Gewindekörper aufgeschraubt wird.

## Revendications

1. Accessoire (30) pour marteau perforateur (10) ledit accessoire ayant une forme allongée le long d'un axe A et comprenant une première extrémité longitudinale (30a) pour une connexion de type SDS et une deuxième extrémité longitudinale (30b) comprenant une cavité (33) avec l'axe A et une section transversale de forme hexagonale configurée pour recevoir un écrou (80a) d'un boulon mural (80) à marteler, **caractérisé en ce qu'**il comprend en outre un doigt (40) d'axe A s'étendant dans ladite cavité, ce doigt étant destiné à avoir un diamètre extérieur inférieur au diamètre intérieur dudit écrou et étant configuré pour être supporté axialement par une extrémité d'un corps fileté (80b) dudit boulon mural pour transmettre des coups.

2. Accessoire (30) selon la revendication 1, comprenant en outre une section de transmission de couple de rotation (30c) distante de ladite première extrémité (30a).

3. Accessoire (30) selon la revendication 2, dans lequel ladite section (30c) a une forme polygonale en coupe transversale.

4. Accessoire (30) selon l'une quelconque des revendications 1 à 3, dans lequel un élément élastiquement déformable (42) est monté autour dudit doigt (40) et est configuré pour être supporté par ledit écrou (80a) afin de le pousser vers le corps fileté (80b).

5. Accessoire (30) selon la revendication 4, dans lequel ledit élément (42) est un ressort hélicoïdal qui s'étend dans ladite cavité (33) autour dudit doigt (40) et dont une première extrémité est fixée au fond de la cavité ou au doigt et dont une deuxième extrémité opposée est configurée pour être supportée par ledit écrou (80a).

6. Accessoire (30) selon l'une quelconque des revendications 1 à 5, réalisé entièrement en métal.

7. Accessoire (30) selon l'une quelconque des revendications 1 à 5, comprenant un corps formé d'une seule pièce en matière plastique et comprenant lesdites première et deuxième extrémités longitudinales (30a, 30b), le doigt (40) étant réalisé en métal et monté et fixé dans la cavité (33) sur la deuxième extrémité longitudinale.

8. Marteau perforateur (10) comportant un mandrin (12) équipé d'une pièce rotative pour le montage d'un foret par une connexion de type SDS, cet outil étant équipé avec un accessoire (30) selon l'une quelconque des revendications précédentes dont la première extrémité longitudinale s'emboîte dans ladite pièce rotative.

9. Outil (10) selon la revendication 8, l'accessoire étant tel que défini dans la revendication 2 ou 3, dans lequel ladite partie rotative comprend des moyens de transmission de couple (28) configurés pour coopérer avec ladite section (30c) par un ajustement de type mâle-femelle.

10. Outil (10) selon l'une quelconque des revendications précédentes, comprenant un sélecteur de mode de perforation (70), respectivement avec et sans marteau, et/ou un sélecteur de vitesse de rotation de pièce rotative (66), et/ou un sélecteur de direction de rotation de pièce rotative (72).

11. Outil (10) selon la revendication précédente comprenant un moteur sans balais (62) entraînant en rotation ladite pièce rotative, ce moteur étant connecté par un microcontrôleur (64) au(x)dit(s) sélecteur(s) (66, 70, 72) et à une gâchette (68) pour l'actionnement de l'outil.

12. Procédé de placement d'un boulon mural (80) à marteler dans un trou (82) dans une paroi (84) au moyen d'un outil (10) selon l'une quelconque des revendications 8 à 11, le boulon mural comprenant un corps fileté (80b) et un écrou (80a), **caractérisé en ce qu'**il comprend les étapes de :
a) l'engagement de l'écrou préalablement vissé sur le corps fileté dans la cavité (33) dudit accessoire (30), le boulon mural étant engagé dans le trou dans la paroi juste avant ou juste après l'étape a),
b) la frappe du corps fileté et simultanément l'entraînement de l'écrou en rotation dans son sens de dévissage,
c) l'entraînement de l'écrou en rotation dans son sens de vissage.

13. Procédé selon la revendication 12, dans lequel l'étape b) est poursuivie jusqu'à ce que la deuxième extrémité longitudinale (30b) de l'accessoire (30) vienne être supportée par la paroi (84) soit directement soit via une rondelle (80e) portée par le boulon mural (80) à marteler.

14. Procédé selon la revendication 12 ou 13, dans lequel l'écrou (80e) est complètement dévissé du corps fileté (80b) durant l'étape b) et revissé sur le corps fileté durant l'étape c).
